(19) Europäisches Patentamt

European Patent Office

Office européen des brevets

(11) EP 2 564 503 B1

(12) EUROPEAN PATENT SPECIFICATION

(45) Date of publication and mention
of the grant of the patent:
**12.03.2014 Bulletin 2014/11**

(51) Int Cl.:
***H02P 9/10*** (2006.01)

(21) Application number: **10721371.2**

(22) Date of filing: **28.04.2010**

(86) International application number:
**PCT/EP2010/055713**

(87) International publication number:
**WO 2011/134505 (03.11.2011 Gazette 2011/44)**

(54) **METHOD OF PREDICTING TRANSIENT STABILITY OF A SYNCHRONOUS GENERATOR AND ASSOCIATED DEVICE**

VERFAHREN ZUR VORHERSAGE VON VORÜBERGEHENDER STABILITÄT EINES SYNCHRONEN GENERATORS UND ZUGEHÖRIGE VORRICHTUNG

PROCÉDÉ DE PRÉDICTION DE STABILITÉ EN RÉGIME TRANSITOIRE D'UN GÉNÉRATEUR SYNCHRONE ET DISPOSITIF ASSOCIÉ

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**06.03.2013 Bulletin 2013/10**

(73) Proprietors:
• **Alstom Technology Ltd.**
**5400 Baden (CH)**
• **Schneider Electric Energy UK Ltd**
**Telford TF3 3BL (GB)**

(72) Inventors:
• **WISZNIEWSKI, Andrzej**
**PL-51-144 Wroclaw (PL)**
• **REBIZANT, Waldemar**
**PL-53-678 Wroclaw (PL)**
• **KLIMEK, Andrzej**
**Surrey, British Columbia VS3 7W8 (CA)**

(74) Representative: **Ilgart, Jean-Christophe**
**BREVALEX**
**95, rue d'Amsterdam**
**75378 Paris Cedex 8 (FR)**

(56) References cited:
**US-B1- 6 625 520**

• **BASLER M J ET AL: "Understanding Power-System Stability", IEEE TRANSACTIONS ON INDUSTRY APPLICATIONS, IEEE SERVICE CENTER, PISCATAWAY, NJ, US, vol. 44, no. 2, 1 March 2008 (2008-03-01), pages 463-474, XP011206325, ISSN: 0093-9994**
• **ARIAS M ET AL: "A quality index applied to transient response evaluation of a synchronous generator", TRANSMISSION AND DISTRIBUTION CONFERENCE AND EXPOSITION: LATIN AMERICA, 2008 IEEE/PES, IEEE, PISCATAWAY, NJ, USA, 13 August 2008 (2008-08-13), pages 1-6, XP031346086, ISBN: 978-1-4244-2217-3**

**Description**

Technical field and prior art

The invention relates to a method of predicting transient stability of a synchronous generator and to a device implementing such a method.

Most of the prior art techniques have a setting for or are setting free to determine the point at which an out-of-step tripping of the generator or the line has to occur. Most of techniques rely on timing the locus of impedance through two load blinders. A problem of the prior art techniques is that they are computationally complex and require a number of settings to operate. In general, it is too late for an intervention which could prevent the instability.

The method of the invention does not have such a drawback.

Document US 6 625 520 discloses a method for predicting a transient stability of a synchronous generator.

Summary of the invention

The method of the invention is an efficient method for prediction of generator transient instability after a disturbance has been developed in a power system. Further, the method of the invention allows an analysis of generator's ability to recover a stable state.

Indeed, the invention concerns a method of predicting a transient stability of a synchronous generator which provides an active electric power $P_e$ and a reactive power $Q_e$ to a power system, wherein the method comprises, after a fault has been cleared:

- a measurement of the electrical power $P_{e1}$, $Q_{e1}$ at time $t_1$ and of the electrical power $P_{e2}$, $Q_{e2}$ at time $t_2$ greater than $t_1$,
- a measurement of the slip of frequency $s_1$ of the synchronous generator at time $t_1$ and of the slip of frequency $s_2$ of the synchronous generator at time $t_2$,
- a calculation, by means of a calculation unit, of:

$$\rightarrow \quad \Delta P = P_{e2} - P_{e1};$$

$$\rightarrow \quad \Delta Q = Q_{e2} - Q_{e1};$$

$$\rightarrow \quad \beta = \omega_0 \, (t_2-t_1)\,(s_2+s_1)/2;$$

$$\rightarrow \quad \frac{EV}{Z} = \frac{\sqrt{\Delta P^2 + \Delta Q^2}}{2\sin\left(\dfrac{\beta}{2}\right)};$$

$$\rightarrow \quad P_B = 0.5\left[\left(P_{e2} + P_{e1}\right) - \left(\Delta Q\right)ctg\left(\frac{\beta}{2}\right)\right];$$

$$\rightarrow \quad \gamma_C = \pi - \gamma_p = \pi - \arcsin\left[\frac{Z\left(P_m - P_B\right)}{EV}\right];$$

$$\rightarrow \quad P_A = P_m - P_B \quad ;$$

$$\rightarrow \quad \gamma_S = \arccos\left(\frac{\Delta P}{\sqrt{\Delta P^2 + \Delta Q^2}}\right) \quad ;$$

$$\rightarrow \quad \gamma_2 = \gamma_S + \beta/2 \quad ;$$

$$\rightarrow \quad QT = \frac{1}{\omega_0 HP_r}\left[\frac{EV}{Z}(\cos\gamma_2 - \cos\gamma_C) - P_A(\gamma_C - \gamma_2)\right] \quad ;$$

With $\omega_0$, H, $P_r$ and $P_m$ being predetermined parameters:

- $\omega_0$ being a nominal angular frequency of the synchronous generator;
- H being an inertia constant of the rotating masses of the synchronous generator;
- $P_r$ being a reference power at which the inertia constant H has been determined;
- $P_m$ being a mechnanical power which drives the synchronous generator, and
- a comparison of QT with $s_2^2$ so that:

If $s_2^2 \leq QT$, the generator maintains stable operation after the initiating fault has been cleared.

If $QT < s_2^2$, transient instability is predicted.

The invention also relates to a device implementing the method of the invention.

The method of the invention enables advantageously close control of evolving dynamic instability, thus helping retain the generator in service in very controllable manner and offer the system operator the information that can be used in rearranging re-configuration of system topology in a timely manner thus contributing to avoiding loss of the generation potentially leading to blackouts.

Brief description of the drawings

Other characteristics and advantages of the invention will become clearer upon reading a preferred embodiment of the invention made in reference to the attached figures, wherein:

- Figure 1 represents an equivalent circuit of the electrical circuit implementing the method of the invention; and
- Figure 2 is a curve allowing to explain the method of the invention.

Detailled description of the preferred embodiment of the invention

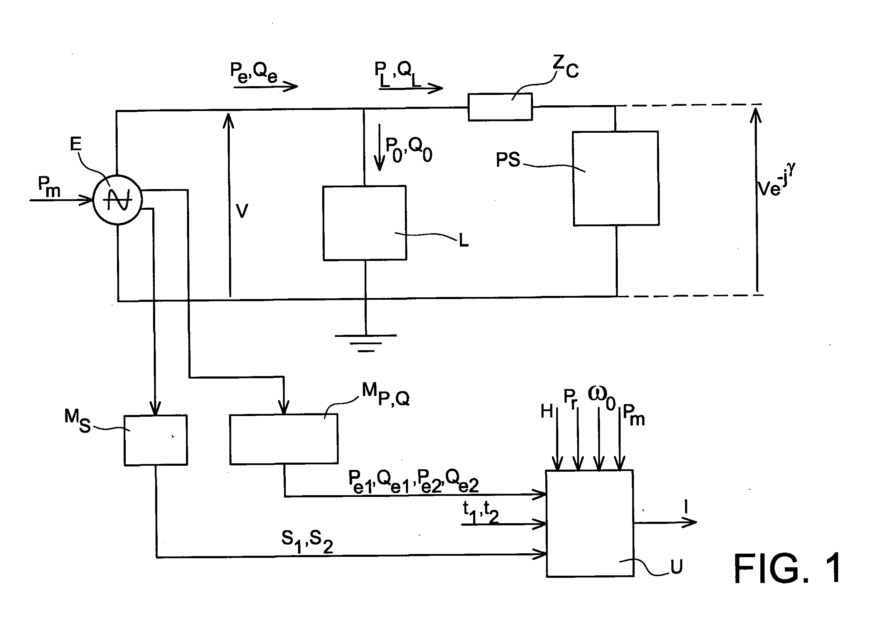

Figure 1 represents an equivalent circuit of the electrical circuit which implements the method of the invention.

The equivalent circuit comprises a synchronous generator E, a load L, a connection impedance $Z_C$, a power system PS, two measurement devices $M_{P,Q}$ and $M_S$ and a calculator U. The load L is connected at the generator terminals and the connection impedance $Z_C$ connects the generator E to the power system PS. A mechanical power $P_m$ drives the generator E and an electrical power $P_e$, $Q_e$ ($P_e$ is the active power and $Q_e$ is the reactive power) is provided at the generator terminals. The electrical power $P_e$, $Q_e$ is divided between the electrical power $P_o$, $Q_o$ provided to the load L ($P_o$ is the active power and $Q_o$ is the reactive power) and the electrical power $P_L$, $Q_L$ provided to the set constituted by the connection impedance $Z_C$ and the power system PS ($P_L$ is the active power and $Q_L$ is the reactive power).

There is a voltage V at the terminals of the generator E and there is a voltage $Ve^{-j\gamma}$ at the terminals of the power system PS. The connection impedance $Z_C$ is such that:

$$Z_C = Z e^{j\varphi}$$

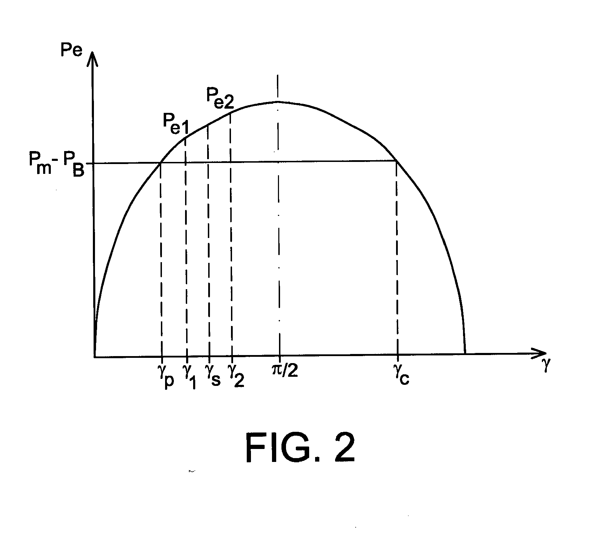

During the normal operation, the mechanical power $P_m$ is matched by the electrical power $P_e$ at a particular phase angle $\gamma_P$ of the phase angle $\gamma$ (see figure 2). The phase angle $\gamma_P$ is:

$$\gamma_P = \arcsin (Z \times (P_m - P_B)/E \times V),$$

where $P_B$ is the power derived from the generator by the local load L ($P_0$) plus power losses in the connecting impedance $Z_C$. As it is known by the man skilled in the art, there is a critical angle $\gamma_C$ which corresponds to angle $\gamma_P$ :

$$\gamma_C = \pi - \gamma_P \quad (cf. \text{ figure 2})$$

The slip of frequency s of the synchronous generator is given by the formula:

$$s = (\omega - \omega_o)/\omega_o,$$

$\omega$ being the current angular frequency of the generator E and $\omega_o$ being the nominal angular frequency of the synchronous generator E.

At the angle $\gamma_P$, the slip may be greater than zero and, because of that, the generator angle increases. For angles $\gamma$ greater than $\gamma_P$ and smaller than $\gamma_C$, the electrical power $P_e$ is greater than the mechanical power $P_m$, therefore the generator decelerates, and in consequence the slip decreases. The transient angular stability becomes lost if, at the critical angle $\gamma_C$, the slip is still greater than zero. If it would be so, the mechanical power would be greater than the electrical power and the generator would accelerate, leading to pole slip. The accelerating power $P_A$ is:

$$P_A = P_m - P_B$$

For an angle $\gamma_M$ measured between $\gamma_P$ and $\gamma_C$, the condition of stability is respected if the slip $s_M$ associated with the angle $\gamma_M$ is:

$$s_M^2 \le \frac{1}{\omega_0 H P_r}\left[\frac{EV}{Z}\left(\cos\gamma_M - \cos\gamma_C\right) - P_A\left(\gamma_C - \gamma_M\right)\right] \quad (1)$$

Where H is the inertia constant of the rotating masses of the system (generator + prime mover) and $P_r$ is a reference power at which the inertia constant H has been determined ($P_r$ is generally the rated power of the generator).

The device of the invention comprises means to check if the inequality (1) is respected or not. To do so, the device of the invention comprises measurement devices $M_{P,Q}$ and $M_S$ and a calculator U.

Therefore, after a fault has been cleared, the measurement device $M_{P,Q}$ measures the electrical power $P_{e1}$, $Q_{e1}$ at time $t_1$ and the electrical power $P_{e2}$, $Q_{e2}$ at time $t_2$ ($t_2 > t_1$) and the measurement device $M_S$ measures the corresponding slips $s_1$ and $s_2$ at respective times $t_1$ and $t_2$ (cf. figure2). At time t1, the angle $\gamma$ is $\gamma_1$ and, at time $t_2$, the angle $\gamma$ is $\gamma_2$. Measurement data $t_1$, $P_{e1}$, $Q_{e1}$, $s_1$, and $t_2$, $P_{e2}$, $Q_{e2}$, $s_2$ are input data of the calculation unit U.

First, the calculation unit U calculates:

$$\Delta P = P_{e2} - P_{e1},$$

$$\Delta Q = Q_{e2} - Q_{e1},$$

and

$\beta = \gamma_2 - \gamma_1$, by means of $s_2$, $t_2$, $s_1$ and $t_1$.

Indeed: $\beta = \omega_0 \int\limits_{t_1}^{t_2} s dt$ , and therefore

$$\beta \doteq \omega_0 \times (t_2 - t_1) \times (s_2 + s_1) / 2$$

Then, the angle $\gamma_S$ ($\gamma_S = [\gamma_2 + \gamma_1]/2$) and $\gamma_2$ are calculated:

$$\gamma_S = \arccos\left(\frac{\Delta P}{\sqrt{\Delta P^2 + \Delta Q^2}}\right) ,$$

$$\gamma_2 = \gamma_S + \beta / 2$$

Also, the quantity EV/Z and the power $P_B$ are calculated:

$$\frac{EV}{Z} = \frac{\sqrt{\Delta P^2 + \Delta Q^2}}{2 \sin\left(\dfrac{\beta}{2}\right)} ,$$

and

$$P_B = 0.5\left[(P_{e2} + P_{e1}) - (\Delta Q)ctg\left(\frac{\beta}{2}\right)\right]$$

As already mentioned, the angle $\gamma_C$ which corresponds to the unstable equilibrium and the acceleration power $P_A$ are respectively:

$$\gamma_C = \pi - \gamma_p = \pi - \arcsin\left[\frac{Z(P_m - P_B)}{EV}\right] ,$$

and

$$P_A = P_m - P_B$$

So, the angle $\gamma_C$ and the acceleration power $P_A$ are also calculated.

Then, the calculation unit calculates the quantity QT such that:

$$QT = \frac{1}{\omega_0 HP_r}\left[\frac{EV}{Z}\left(\cos\gamma_2 - \cos\gamma_C\right) - P_A\left(\gamma_C - \gamma_2\right)\right]$$

QT is then compared with $s_2^2$.

If $s_2^2 \leq QT$, the generator maintains stable operation after the initiating fault has been cleared.

If $QT < s_2^2$, transient instability can be predicted.

So, the process of the invention allows advantageously to get an information I which indicates, before it actually happens, whether the slip will be greater than zero or not at the critical phase angle.

The prediction method of the invention calculates the information I based on measurements of locally available signals: active and reactive powers, their rate of change, and rotor slip. Knowing those parameters, the critical phase angle can be determined and it is possible to check before it actually happens whether the slip will be greater than zero at the critical angle. The measurement device $M_{P,Q}$ is for example a computer or a microprocessor with implemented appropriate algorithms for active and reactive power measurement. The measurement device $M_S$ is for example analogue or digital generator rotating speed and slip measurement unit. The calculator U is, for example, a computer or a microprocessor.

**Claims**

1. Method of predicting a transient stability of a synchronous generator (E) which provides an active electric power $P_e$ and a reactive power $Q_e$ to a power system (PS), wherein the method comprises, after a fault has been cleared:

   - a measurement of the electrical power $P_{e1}$, $Q_{e1}$ at time $t_1$ and of the electrical power $P_{e2}$, $Q_{e2}$ at time $t_2$ greater than $t_1$,
   - a measurement of the slip of frequency $s_1$ of the synchronous generator at time $t_1$ and of the slip of frequency $s_2$ of the synchronous generator at time $t_2$,
   - a calculation, by means of a calculation unit (U), of:

$$\rightarrow \quad \Delta P = P_{e2} - P_{e1};$$

$$\rightarrow \quad \Delta Q = Q_{e2} - Q_{e1};$$

$$\rightarrow \quad \beta = \omega_0 (t_2 - t_1)(s_2 + s_1)/2;$$

$$\rightarrow \quad \frac{EV}{Z} = \frac{\sqrt{\Delta P^2 + \Delta Q^2}}{2\sin\left(\frac{\beta}{2}\right)};$$

$$\rightarrow \quad P_\beta = 0.5\left[\left(P_{e2} + P_{e1}\right) - \left(\Delta Q\right)ctg\left(\frac{\beta}{2}\right)\right];$$

$$\rightarrow \quad \gamma_C = \pi - \gamma_p = \pi - \arcsin\left[\frac{Z(P_m - P_\beta)}{EV}\right];$$

$$\rightarrow \quad P_A = P_m - P_B \; ;$$

$$\rightarrow \quad \gamma_S = \arccos\left(\frac{\Delta P}{\sqrt{\Delta P^2 + \Delta Q^2}}\right) \; ;$$

$$\rightarrow \quad \gamma_2 = \gamma_S + \beta/2 \; ;$$

$$\rightarrow \quad QT = \frac{1}{\omega_0 H P_r}\left[\frac{EV}{Z}(\cos\gamma_2 - \cos\gamma_C) - P_A(\gamma_C - \gamma_2)\right] \; ;$$

With $\omega_0$, H, $P_r$ and $P_m$ being predetermined parameters:

- $\omega_0$ being a nominal angular frequency of the synchronous generator (E);
- H being an inertia constant of the rotating masses of the synchronous generator;
- $P_r$ being a reference power at which the inertia constant H has been determined;
- $P_m$ being a mechnanical power which drives the synchronous generator, and
- a comparison of QT with $s_2^2$ so that:

If $s_2^2 \leq QT$, the generator maintains stable operation after the initiating fault has been cleared.
If $QT < s_2^2$, transient instability is predicted.

2. Device for predicting a transient stability of a synchronous generator (E) which provides an active electric power $P_e$ and a reactive power $Q_e$ to a power system (PS), wherein the device comprises :

- a measurement device ($M_{P,Q}$) which measures the electrical power $P_{e1}$, $Q_{e1}$ at time $t_1$ after a fault has been cleared and the electrical power $P_{e2}$, $Q_{e2}$ at time $t_2$ greater than $t_1$,
- a measurement device ($M_S$) which measures the slip of frequency $s_1$ of the synchronous generator at time $t_1$ and of the slip of frequency $s_2$ of the synchronous generator at time $t_2$,
- a calculation unit (U) which calculates:

$$\rightarrow \quad \Delta P = P_{e2} - P_{e1};$$

$$\rightarrow \quad \Delta Q = Q_{e2} - Q_{e1} \; ;$$

$$\rightarrow \quad \beta = \omega_0 \, (t_2 - t_1)\,(s_2 + s_1)/2 \; ;$$

$$\rightarrow \quad \frac{EV}{Z} = \frac{\sqrt{\Delta P^2 + \Delta Q^2}}{2\sin\left(\dfrac{\beta}{2}\right)} \; ;$$

$$\rightarrow \quad P_B = 0.5\left[(P_{e2} + P_{e1}) - (\Delta Q)ctg\left(\frac{\beta}{2}\right)\right] \quad ;$$

$$\rightarrow \quad \gamma_C = \pi - \gamma_p = \pi - \arcsin\left[\frac{Z(P_m - P_B)}{EV}\right] ;$$

$$\rightarrow \quad P_A = P_m - P_B ;$$

$$\rightarrow \quad \gamma_S = \arccos\left(\frac{\Delta P}{\sqrt{\Delta P^2 + \Delta Q^2}}\right) \quad ;$$

$$\rightarrow \quad \gamma_2 = \gamma_S + \beta/2 \quad ;$$

$$\rightarrow \quad QT = \frac{1}{\omega_0 H P_r}\left[\frac{EV}{Z}(\cos\gamma_2 - \cos\gamma_C) - P_A(\gamma_C - \gamma_2)\right] \quad ;$$

With $\omega_0$, H, $P_r$ and $P_m$ being predetermined parameters:

- $\omega_0$ being a nominal angular frequency of the synchronous generator (E);
- H being an inertia constant of the rotating masses of the synchronous generator;
- $P_r$ being a reference power at which the inertia constant H has been determined;
- $P_m$ being a mechnanical power which drives the synchronous generator, and
- comparison means (U) to compare QT with $s_2^2$ so that:

If $s_2^2 \le QT$, the generator maintains stable operation after the initiating fault has been cleared.
If $QT < s_2^2$, transient instability is predicted.

**Patentansprüche**

1. Verfahren zum Vorhersagen einer transienten Stabilität eines Synchrongenerators (E), der eine elektrische Wirkleistung $P_e$ und eine Blindleistung $Q_e$ an ein Stromversorgungssystem (PS) liefert, wobei das Verfahren, nachdem eine Störung beseitigt worden ist, umfasst:

- eine Messung der elektrischen Leistung $P_{e1}$, $Q_{e1}$ zu Zeitpunkt $t_1$ und der elektrischen Leistung $P_{e2}$, $Q_{e2}$ zu Zeitpunkt $t_2$, der größer als $t_1$ ist,
- eine Messung des Schlupfes bei Frequenz $s_1$ des Synchrongenerators zu Zeitpunkt $t_1$ und des Schlupfes bei Frequenz $s_2$ des Synchrongenerators zu Zeitpunkt $t_2$,
- eine Berechnung mittels einer Berechnungseinheit (U) von:

$$\rightarrow \quad \Delta P = P_{e2} - P_{e1};$$

$$\rightarrow \quad \Delta Q = Q_{e2} - Q_{e1};$$

$$\rightarrow \quad \beta = \omega_0 (t_2 - t_1)(s_2 + s_1)/2 \;;$$

$$\rightarrow \quad \frac{EV}{2} = \frac{\sqrt{\Delta P^2 + \Delta Q^2}}{2\sin\left(\dfrac{\beta}{2}\right)};$$

$$\rightarrow \quad P_B = 0,5\left[(P_{e2} + P_{e1}) - (\Delta Q)ctg\left(\frac{\beta}{2}\right)\right];$$

$$\rightarrow \quad \gamma_c = \pi - \gamma_p = \pi - \arcsin\left[\frac{Z(P_m - P_B)}{EV}\right];$$

$$\rightarrow \quad P_A = P_m - P_B;$$

$$\rightarrow \quad \gamma_s = \arccos\left(\frac{\Delta P}{\sqrt{\Delta P^2 + \Delta Q^2}}\right);$$

$$\rightarrow \quad \gamma_2 = \gamma_s + \beta/2;$$

$$\rightarrow \quad QT = \frac{1}{\omega_0 HP_r}\left[\frac{EV}{Z}(\cos\gamma_2 - \cos\gamma_c) - P_A(\gamma_c - \gamma_2)\right];$$

wobei $\omega_0$, H, $P_r$ und $P_m$ vorbestimmte Parameter sind:
- $\omega_0$ eine Nennwinkelfrequenz des Synchrongenerators (E) ist;
- H eine Trägheitskonstante der rotierenden Massen des Synchrongenerators ist;
- $P_r$ eine Referenzleistung ist, bei der die Trägheitskonstante H ermittelt worden ist;
- $P_m$ eine mechanische Leistung ist, die den Synchrongenerator antreibt, und
- einen Vergleich von QT mit $s_2^2$, so dass:

falls $s_2^2 \leq QT$, der Generator einen stabilen Betrieb aufrechterhält, nachdem die Initialstörung beseitigt worden ist,
falls $QT < s_2^2$, eine transiente Instabilität vorhergesagt wird.

2. Vorrichtung zum Vorhersagen einer transienten Stabilität eines Synchrongenerators (E), der eine elektrische Wirkleistung $P_e$ und eine Blindleistung $Q_e$ an ein Stromerzeugungssystem (PS) liefert, wobei die Vorrichtung umfasst:

- eine Messvorrichtung ($M_{P,Q}$), die die elektrische Leistung $P_{e1}$, $Q_{e1}$ zu Zeitpunkt $t_1$, nachdem eine Störung beseitigt worden ist, und die elektrische Leistung $P_{e2}$, $Q_{e2}$ zu Zeitpunkt $t_2$, der größer als $t_1$ ist, misst,
- eine Messvorrichtung ($M_s$), die den Schlupf bei Frequenz $s_1$ des Synchrongenerators zu Zeitpunkt $t_1$ und den Schlupf bei Frequenz $s_2$ des Synchrongenerators zu Zeitpunkt $t_2$ misst,
- eine Berechnungseinheit (U), welche berechnet:

$$\rightarrow \quad \Delta P = P_{e2} - P_{e1};$$

$$\rightarrow \quad \Delta Q = Q_{e2} - Q_{e1};$$

$$\rightarrow \quad \beta = \omega_0 \, (t_2 - t_1) \, (s_2 + s_1)/2 \, ;$$

$$\rightarrow \quad \frac{EV}{2} = \frac{\sqrt{\Delta P^2 + \Delta Q^2}}{2\sin\left(\dfrac{\beta}{2}\right)};$$

$$\rightarrow \quad P_B = 0{,}5 \left[ (P_{e2} + P_{e1}) - (\Delta Q)\mathrm{ctg}\left(\frac{\beta}{2}\right) \right];$$

$$\rightarrow \quad \gamma_c = \pi - \gamma_p = \pi - \arcsin\left[ \frac{Z(P_m - P_B)}{EV} \right];$$

$$\rightarrow \quad P_A = P_m - P_B;$$

$$\rightarrow \quad \gamma_s = \arccos\left( \frac{\Delta P}{\sqrt{\Delta P^2 + \Delta Q^2}} \right);$$

$$\rightarrow \quad \gamma_2 = \gamma_s + \beta/2;$$

$$\rightarrow \quad QT = \frac{1}{\omega_0 H P_r} \left[ \frac{EV}{Z} (\cos\gamma_2 - \cos\gamma_c) - P_A(\gamma_c - \gamma_2) \right];$$

wobei $\omega_0$, H, $P_r$ und $P_m$ vorbestimmte Parameter sind:
- $\omega_0$ eine Nennwinkelfrequenz des Synchrongenerators (E) ist;
- H eine Trägheitskonstante der rotierenden Massen des Synchrongenerators ist;
- $P_r$ eine Referenzleistung ist, bei der die Trägheitskonstante H ermittelt worden ist;

- $P_m$ eine mechanische Leistung ist, die den Synchrongenerator antreibt, und
- Vergleichsmittel (U), um QT mit $s_2^2$ zu vergleichen, so dass: falls $s_2^2 \leq QT$, der Generator einen stabilen Betrieb aufrechterhält, nachdem die Initialstörung beseitigt worden ist, falls $QT < s_2^2$, eine transiente Instabilität vorhergesagt wird.

**Revendications**

1. Procédé de prédiction d'une stabilité transitoire d'une génératrice synchrone (E) qui fournit une puissance électrique active $P_e$ et une puissance réactive $Q_e$ à un système d'alimentation (PS), dans lequel le procédé comprend, après élimination d'une défaillance :

- une mesure de la puissance électrique $P_{e1}$, $Q_{e1}$ à un moment $t_1$ et de la puissance électrique $P_{e2}$, $Q_{e2}$ à un moment $t_2$ supérieur à $t_1$,
- une mesure du glissement de fréquence $s_1$ de la génératrice synchrone à un moment $t_1$ et du glissement de fréquence $s_2$ de la génératrice synchrone à un moment $t_2$,
- un calcul, au moyen d'une unité de calcul (U), de :

$$\rightarrow \quad \Delta P = P_{e2} - P_{e1};$$

$$\rightarrow \quad \Delta Q = Q_{e2} - Q_{e1};$$

$$\rightarrow \quad \beta = \omega_0 \, (t_2 - t_1)(s_2 + s_1)/2 \ ;$$

$$\rightarrow \quad \frac{EV}{Z} = \frac{\sqrt{\Delta P^2 + \Delta Q^2}}{2\sin\left(\dfrac{\beta}{2}\right)} \ ;$$

$$\rightarrow \quad P_\beta = 0,5\left[(P_{e2} + P_{e1}) - (\Delta Q)ctg\left(\frac{\beta}{2}\right)\right] \ ;$$

$$\rightarrow \quad \gamma_C = \pi - \gamma_p = \pi - \arcsin\left[\frac{Z(P_m - P_\beta)}{EV}\right];$$

$$\rightarrow \quad P_A = P_m - P_\beta \ ;$$

$$\rightarrow \quad \gamma_S = \arccos\left(\frac{\Delta P}{\sqrt{\Delta P^2 + \Delta Q^2}}\right) \ ;$$

$$\rightarrow \quad \gamma_2 = \gamma_S + \beta/2 \ ;$$

$$\rightarrow \quad QT = \frac{1}{\omega_0 H P_r}\left[\frac{EV}{Z}(\cos\gamma_2 - \cos\gamma_c) - P_A(\gamma_c - \gamma_2)\right] \quad ;$$

$\omega_0$, H, $P_r$ et $P_m$ étant des paramètres prédéterminés :
- $\omega_0$ étant une fréquence angulaire nominale de la génératrice synchrone (E) ;
- H étant une constante d'inertie des masses rotatives de la génératrice synchrone ;
- $P_r$ étant une puissance de référence à laquelle la constante d'inertie H a été déterminée ;
- $P_m$ étant une puissance mécanique qui entraîne la génératrice synchrone, et
- une comparaison de QT à $s_2^2$ de sorte que :

si $s_2^2 \leq QT$, la génératrice maintient un fonctionnement stable après que la défaillance d'origine a été éliminée,
si $QT < s_2^2$, une instabilité transitoire est prédite.

2. Dispositif de prédiction d'une stabilité transitoire d'une génératrice synchrone (E) qui fournit une puissance électrique active $P_e$ et une puissance réactive $Q_e$ à un système d'alimentation (PS), dans lequel le dispositif comprend :

- un dispositif de mesure ($M_{P,Q}$) qui mesure la puissance électrique $P_{e1}$, $Q_{e1}$ à un moment $t_1$ après qu'une défaillance a été éliminée et la puissance électrique $P_{e2}$, $Q_{e2}$ à un moment $t_2$ supérieur à $t_1$,
- un dispositif de mesure ($M_s$) qui mesure le glissement de fréquence $s_1$ de la génératrice synchrone à un moment $t_1$ et le glissement de fréquence $s_2$ de la génératrice synchrone à un moment $t_2$,
- une unité de calcul (U) qui calcule :

$$\rightarrow \quad \Delta P = P_{e2} - P_{e1};$$

$$\rightarrow \quad \Delta Q = Q_{e2} - Q_{e1} \quad ;$$

$$\rightarrow \quad \beta = \omega_0 \ (t_2-t_1)\ (s_2+s_1)/2 \quad ;$$

$$\rightarrow \quad \frac{EV}{Z} = \frac{\sqrt{\Delta P^2 + \Delta Q^2}}{2\sin\left(\dfrac{\beta}{2}\right)} \quad ;$$

$$\rightarrow \quad P_B = 0{,}5\left[(P_{e2} + P_{e1}) - (\Delta Q)ctg\left(\frac{\beta}{2}\right)\right] \quad ;$$

$$\rightarrow \quad \gamma_C = \pi - \gamma_p = \pi - \arcsin\left[\frac{Z(P_m - P_B)}{EV}\right];$$

$$\rightarrow \quad P_A = P_m - P_B \quad ;$$

$$\rightarrow \quad \gamma_s = \arccos\left(\frac{\Delta P}{\sqrt{\Delta P^2 + \Delta Q^2}}\right) \quad ;$$

$$\rightarrow \quad \gamma_2 = \gamma_s + \beta/2 \quad ;$$

$$\rightarrow \quad QT = \frac{1}{\omega_0 H P_r}\left[\frac{EV}{Z}(\cos\gamma_2 - \cos\gamma_c) - P_A(\gamma_c - \gamma_2)\right] \quad ;$$

$\omega_0$, H, $P_r$ et $P_m$ étant des paramètres prédéterminés :
- $\omega_0$ étant une fréquence angulaire nominale de la génératrice synchrone (E) ;
- H étant une constante d'inertie des masses rotatives de la génératrice synchrone ;
- $P_r$ étant une puissance de référence à laquelle la constante d'inertie H a été déterminée ;
- $P_m$ étant une puissance mécanique qui entraîne la génératrice synchrone, et
- un moyen de comparaison (U) destiné à comparer QT à $s_2^2$ de sorte que :

si $s_2^2 \leq QT$, la génératrice maintient un fonctionnement stable après que la défaillance d'origine a été éliminée,
si $QT < s_2^2$, une instabilité transitoire est prédite.

FIG. 1

EP 2 564 503 B1

FIG. 2

## REFERENCES CITED IN THE DESCRIPTION

**Patent documents cited in the description**

- US 6625520 B